Europäisches Patentamt

European Patent Office

Office européen des brevets

(19)

(11) Veröffentlichungsnummer: **0 330 851**

**A2**

(12) **EUROPÄISCHE PATENTANMELDUNG**

(21) Anmeldenummer: 89101722.0

(22) Anmeldetag: 01.02.89

(51) Int. Cl.⁴: **H02H 3/16 , H02H 7/26**

(30) Priorität: 03.03.88 DE 3806827

(43) Veröffentlichungstag der Anmeldung:
06.09.89 Patentblatt 89/36

(84) Benannte Vertragsstaaten:
**AT BE CH DE ES FR GB GR IT LI NL SE**

(71) Anmelder: **Licentia Patent-Verwaltungs-GmbH
Theodor-Stern-Kai 1
D-6000 Frankfurt/Main 70(DE)**

(72) Erfinder: **Kranert, Klaus, Dr. Ing.
Wittenbergener Weg 9
D-2000 Hamburg 56(DE)**
Erfinder: **Hagemann, Hans-Jürgen, Dipl.-Ing.
Henriettenstrasse 43
D-2000 Hamburg 19(DE)**

(74) Vertreter: **Lertes, Kurt, Dr. et al
Licentia Patent-Verwaltungs-GmbH
Theodor-Stern-Kai 1
D-6000 Frankfurt/M 70(DE)**

(54) Verfahren zur Erfassung und Begrenzung eines Erdschlussstromes.

(57) Verfahren zur Erfassung und Begrenzung eines Erdschlußstromes in großen Bordnetz- und Fahrnetzkraftwerken, wobei mehrere Generatoren über jeweils einen zugehörenden Generatorschutzschalter in das Netz speisen. Es ist ein einphasiger Transformator mit geerdeter Primärwicklung in der Sternpunktleitung jedes Generators und mit sekundärseitig einen begrenzten Strom bei vollem Erdschluß zulassenden Widerstand vorgesehen. Um ohne Fremdspannungsquellen auszukommen, wird:

a, sekundärseitig eine Doppelweggleichrichtung eines erfaßten Erdschlußstromes durchgeführt,

b, bei Überschreiten eines einstellbaren Stromgrenzwertes der gleichgerichtete Erdschlußstrom mit einer festen Frequenz getaktet,

c, der mit der Taktfrequenz modulierte Erdschlußstrom netz- und sternpunktseitig in jeder Phase der Generatoren erfaßt,

d, der netz- und sternpunktseitig erfaßte Erdschlußstrom in jeder Phase miteinander verglichen, und

e, aufgrund des Vergleichs ein erdschlußbehafteter Generator, die erdschlußbehaftete Phase des Generators oder das Netz als erdschlußbehaftet ermittelt.

FIG.1

# Verfahren zur Erfassung und Begrenzung eines Erdschlußstromes

Die Erfindung betrifft ein Verfahren zur Erfassung und Begrenzung eines Erdschlußstromes gemäß dem Oberbegriff von Anspruch 1 sowie Schaltungsanordnungen zur Durchführung des Verfahrens.

Erdschlußüberwachungseinrichtungen mit Erdschlußrichtungserkennung sind bekannt. Bei diesen Überwachungseinrichtungen wird z. B. die Blindleistungsrichtung der Netzoberschwingungen verwendet. Für eine eindeutige selektive Erdschlußerfassung muß bei Verwendung der netzeigenen fünften Netzoberschwingung der Pegel größer 0,5% sein. Wird dieser Pegel unterschritten, ist es erforderlich, netzfremde Oberschwingungen, z. B. Start und Steuerimpulse von Tonfrequenz-Rundsteueranlagen mit definiertem Pegel, auszuwerten.

Eine weitere Möglichkeit zur Erfassung von Erdschlüssen in der Ständerwicklung von Drehstrommaschinen, die jedoch über einen Blocktransformator mit dem Netz verbunden sind, ist der statische Ständererdschlußschutz 7UE22 der Fa. Siemens. Bei dieser Schutzeinrichtung wird im Falle eines Erdschlusses ein Strom aus einer 20 Hz-Hilfsspannungsquelle über die Fehlerstelle getrieben. Dieser Strom wird erfaßt und über Tiefpaßfilter einer Meßeinrichtung zugeführt, die den Erdschlußstrom auswertet und die Schutzeinrichtung auslöst, sobald ein vorgegebener Ansprechwert überschritten ist. Der Anschluß der Schutzeinrichtung erfolgt über Erdungs-oder Nullpunkttransformator im Maschinensternpunkt.

Der Erfindung liegt die Aufgabe zugrunde, ein Verfahren der eingangs genannten Art sowie Schaltungsanordnung zur Durchführung des Verfahrens vorzuschlagen, durch die ohne die Verwendung von Fremdspannungsquellen die Erkennung und Selektion von Erdschlüssen nach Generator, Phase oder Netz ermöglicht wird.

Die Aufgabe wird erfindungsgemäß durch die kennzeichnenden Verfahrensschritte des Anspruchs 1 gelöst.

Ausgestaltungen des erfindungsgemäßen Verfahrens sind in den Unteransprüchen 2 bis 8 beschrieben.

Schaltungsanordnungen zur Durchführung des erfindungsgemäßen Verfahrens sind in den Unteransprüchen 9 und 11 beansprucht.

Weiterbildungen der erfindungsgemäßen Schaltungsanordnungen beschreiben die Unteransprüche 10 bis 14.

Wesentliche Vorteile der Erfindung sind in der Löschung von Überschlägen durch periodische Unterbrechungen des Fehlerstromes und in der selektiven Abschaltung bei bleibenden Erdschlüssen zu sehen. Weitere erfindungsgemäße Vorteile bestehen in einer höheren Meßempfindlichkeit gegenüber herkömmlichen Verfahren, in einer geringen Energieverbrauch, in der Möglichkeit eines Kurzzeitbetriebes bei Auftritt eines Störungsfalles und in einer kostengünstigen Lösung durch die Verwendung von kleinen Bauteilen infolge hoher Taktfrequenz.

In der Zeichnung ist ein Ausführungsbeispiel nach der Erfindung dargestellt und zwar zeigen:

Fig. 1 eine Schaltungsanordnung, bei der jeder Generator in seiner Sternpunktleitung einen einphasigen Transformator mit geerdeter Primärwicklung aufweist, und

Fig. 2 eine Schaltungsanordnung mit einem am Netz primärseitig angeschlossenen Drehstromtransformator mit geerdetem Sternpunkt der Primärwicklungen und im Dreieck geschalteten Sekundärwicklungen.

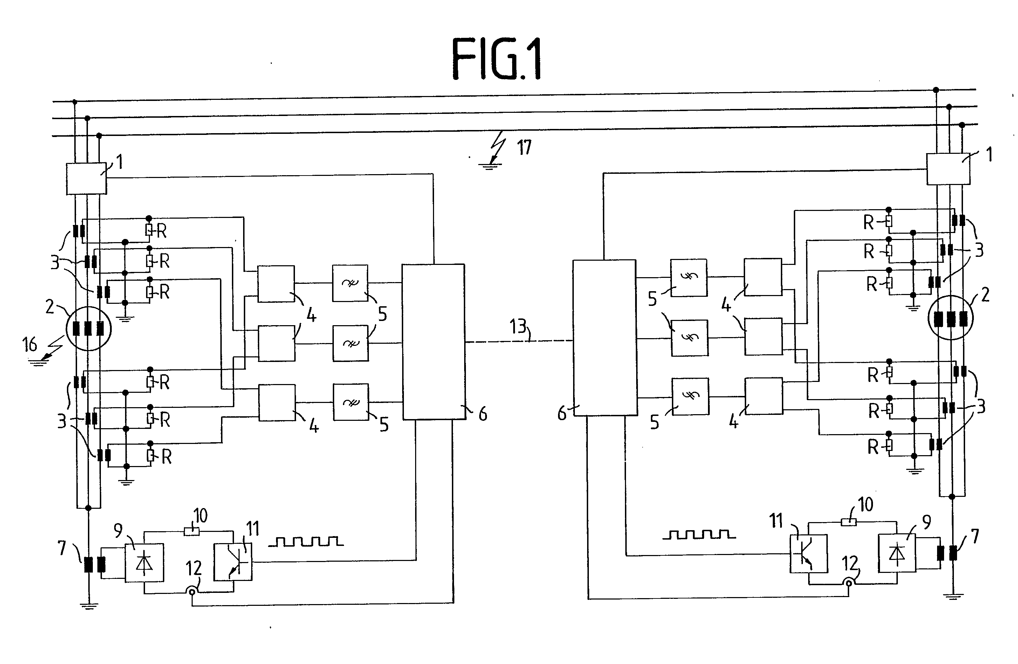

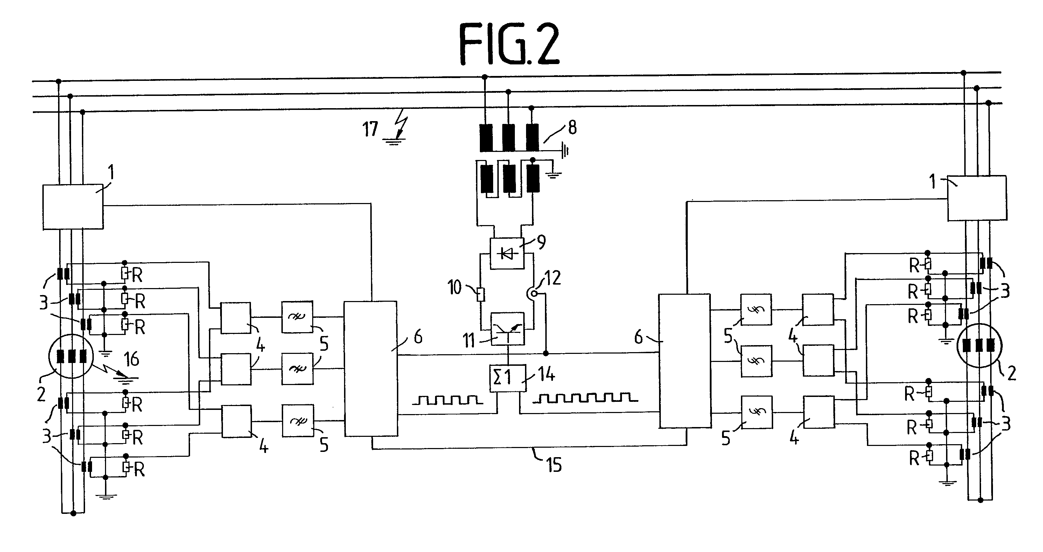

In den Figure 1 und 2 sind über jeweils einen Generatorschutzschalter 1 in ein Netz speisende Generatoren mit 2 und die in jeder Phase netz- und sternpunktseitig angeordneten Stromwandler mit 3 bezeichnet. Die Ausgänge dieser Stromwandler mit zugehörenden Bürden R sind an Auswerteeinrichtungen 4 angeschlossen, deren Filter 5 sowie jeweils eine einem Generator 2 zugeordnete Überwachungseinrichtung 6 nachgeordnet sind. Während in Fig. 1 die in den Sternpunktleitungen der Generatoren 2 angeordneten Transformatoren mit geerdeter Primärwicklung das Bezugszeichen 7 tragen, ist der in Fig. 2 ersichtliche Drehstromtransformator mit geerdetem Sternpunkt der Primärwicklungen und im Dreieck geschalteten Sekundärwicklungen mit dem Bezugszeichen 8 versehen. Gleiche Bezugszeichen tragen hingegen wieder die sekundärseitig vorgesehenen Bauelemente, nämlich die Gleichrichter 9, die Widerstände 10, die Halbleiterschalter 11 und die Meßeinrichtungen 12 zur Erfassung eines gleichgerichteten Erdschlußstromes. Zusätzlich weist die Schaltungsanordnung aus Fig. 1 eine Synchronisationsleitung 13 zur Synchronisation der Überwachungseinrichtungen 6 der beiden parallel betriebenen Generatoren 2 auf. Die Schaltungsanordnung gemäß Fig. 2 hat im Gegensatz zu derjenigen aus Fig. 1 einen Taktbaustein 14, der zwischen dem Steuereingang des Halbleiterschalters 11 und den Taktausgängen der Überwachungseinrichtungen 6 angeordnet ist, und eine Steuerleitung 15 zwischen zwei Überwachungseinrichtungen 6, die die Erzeugung der Taktimpulsfolge für den Halbleiterschalter 11 nur von einer Überwachungseinrichtung 6 ermöglicht. Bei Parallelbetrieb mehrerer Generatoren 2 erfolgt eine Abgabe eines einem Erdschlußstrom proportionalen Signales von der Meßeinrichtung 12 an alle Überwachungseinrichtungen 6.

Für eine Fehlererkennung sind die Generatoren 2 über Sternpunkttransformatoren 7 (Fig. 1) oder das Netz über den Erdungstransformator 8 (Fig. 2) nieder ohmig geerdet. Die Sekundärwicklungen der Transformatoren 7 bzw. 8 sind an die Gleichrichter 9 angeschlossen, die gleichstromseitig auf die Strombegrenzungswiderstände 10 und die Halbleiterschalter 11 gehen. Die Halbleiterschalter 11 erhalten bei erdschlußfreiem Betrieb ein Dauerzündsignal aus den Überwachungseinrichtungen 6. Bei einem Erdschluß (16 ≙ Ständererdschluß, 17 ≙ Netzerdschluß) fließt der Erdschlußstrom über den Transformator 7 (Fig. 1) bzw. 8 (Fig. 2). Der Erdschlußstrom wird durch die Strombegrenzungswiderstände 10 und das Übersetzungsverhältnis der Transformatoren 7 bzw. 8 begrenzt.

Mit den Meßeinrichtungen 12 wird der gleichgerichtete Erdschlußstrom erfaßt und in den Überwachungseinrichtungen 6 mit einem Referenzwert verglichen. Ist der Erdschlußstrom größer als die vorgegebene Referenz, takten die Überwachungseinrichtungen 6 die Halbleiterschalter 11 mit einer festen, nicht im Netz vorkommenden Frequenz. Als Taktfrequenz kann ein gerades Vielfaches der Grundfrequenz des Netzes verwendet werden. Auf diese Art erfolgt eine direkte Modulation des Erdschlußstromes mit der Taktfrequenz.

Die an den Bürden R der Stromwandler 3 abgegriffene, dem Strom proprotionale Spannung wird den Auswerteeinrichtungen 6 zugeführt, in denen die den Strom proportionalen Signale der netz- und sternpunktseitigen Stromwandler 3 miteinander verglichen werden. Als Vergleich ist die Bildung einer Differenz zwischen den Signalen oder eine Multiplikation der Signale vorgesehen, wobei die erhaltenen Vergleichssignale den Filtern 5 zugeführt werden.

Die Filter 5 sind auf die Taktfrequenz abgestimmt. Auf diese Art wird aus dem moduliertem Erdschlußstrom ein Signal erzeugt, aus dem in den Überwachungseinrichtungen 6 Ständer- oder Netzerdschluß 16 bzw. 17 abgeleitet werden kann. Diese Auswertung erfolgt in jeden Generator 2 getrennt. Bei einem Ständererdschluß 16 wird von den Überwachungseinrichtungen 6 ein Ausschaltsignal erzeugt, das an den Generatorschalter 1 des erdschlußbehafteten Generators (2) weitergeleitet wird. Sind netzseitig neben den Spannungswandlern 3 auch zeichnerisch nicht dargestellte Stromwandler vorhanden, so wird auch die Phasenspannung gefiltert. Aus dem Produkt von getaktetem Erdschlußstrom und -spannung wird dann der erdschlußbehaftete Generator 2 erkannt.

Werden (wie in Fig. 1 dargestellt) Generatoren 2 parallel betrieben, wird eine Synchronisation der Überwachungseinrichtungen 6 über die Synchronisationsleitung 13 durchgeführt. Im Fehlerfall erfolgt eine synchrone Taktung der Halbleiterschalter 11. Diese Maßnahme verhindert Fehlauswertungen durch unterschiedliche Phasenlagen der modulierten Erdschlußströme bei Parallelbetrieb mehrerer Generatoren 2.

Bei Parallelbetrieb mehrerer Generatoren 2 in der Schaltungsanordnung nach Fig. 2 wird das, dem Erdschlußstrom proportionale Signal der Meßeinrichtung 12 allen Überwachungseinrichtungen 6 zugeführt. Über die Steuerleitung 15 werden die Überwachungseinrichtungen 6 so gesteuert, daß nur eine den Takt für den Halbleiterschalter 11 erzeugt.

Das erfindungsgemäße Verfahren zur Erfassung und Begrenzung eines Erdschlußstromes zeichnet sich zusammenfassend durch folgende Verfahrensschritte aus:

a, sekundärseitig wird eine Doppelweggleichrichtung eines erfaßten Erdschlußstromes durchgeführt, der durch Dauerzündung eines Halbleiterschalters 11 fließen kann,

b, bei Überschreiten eines einstellbaren Stromgrenzwertes wird der gleichgerichtete Erdschlußstrom mit einer festen Frequenz durch den Halbleiterschalter 11 getaktet, die im Netz als Oberwelle nicht auftritt,

c, der mit der Taktfrequenz modulierte Erdschlußstrom wird netz- und sternpunktseitig in jeder Phase der Generatoren 2 erfaßt,

d, die netz- und sternpunktseitig erfaßten Erdschlußströme werden in jeder Phase der Generatoren 2 miteinander verglichen, und

e, aufgrund des Vergleichs wird ein erdschlußbehafteter Generator 2, die erdschlußbehaftete Phase des Generators 2 oder das Netz als erdschlußbehaftet ermittelt sowie gegebenenfalls ein Schaltsignal für die Generatorschutzschalter 1 erzeugt.

**Ansprüche**

1. Verfahren zur Erfassung und Begrenzung eines Erdschlußstromes in großen Bordnetz- und Fahrnetzkraftwerken auf Schiffen oder in Landkraftwerken, wobei vorzugsweise mehrere Generatoren (2) über jeweils einen zugehörenden Generatorschutzschalter (1) in das Netz speisen, unter Verwendung entweder eines einphasigen Transformators (7) mit geerdeter Primärwicklung in der Sternpunktleitung jedes Generators (2) oder eines Drehstromtransformators (8) mit geerdetem Sternpunkt der Primärwicklungen und im Dreieck geschalteten Sekundärwicklungen, wobei sekundärseitig ein einen begrenzten Strom bei vollem Erdschluß zulassender Widerstand (10) vorgesehen ist, gekennzeichnet durch folgende Verfahrensschritte:

a, sekundärseitig wird eine Doppelweggleichrichtung eines erfaßten Erdschlußstromes durchgeführt, der durch Dauerzündung eines Halbleiterschalters (11) fließen kann,

b, bei Überschreiten eines einstellbaren Stromgrenzwertes wird der gleichgerichtete Erdschlußstrom mit einer festen Frequenz durch den Halbleiterschalter (11) getaktet, die im Netz als Oberwelle nicht auftritt,

c, der mit der Taktfrequenz modulierte Erdschlußstrom wird netz- und sternpunktseitig in jeder Phase der Generatoren (2) erfaßt,

d, die netz- und sternpunktseitig erfaßten Erdschlußströme werden in jeder Phase der Generatoren (2) miteinander verglichen, und

e, aufgrund des Vergleichs wird ein erdschlußbehafteter Generator (2), die erdschlußbehaftete Phase des Generators (2) oder das Netz als erdschlußbehaftet ermittelt sowie gegebenenfalls ein Schaltsignal für die Generatorschutzschalter (1) erzeugt.

2. Verfahren nach Anspruch 1, dadurch gekennzeichnet, daß als Taktfrequenz ein gerades Vielfaches der Grundfrequenz des Netzes verwendet wird.

3. Verfahren nach Anspruch 1, dadurch gekennzeichnet, daß die netz-und sternpunktseitig erfaßten modulierten Erdschlußströme voneinander abgezogen werden, und daß die Differenzbeträge dieser Ströme für die Erdschlußerfassung und -begrenzung verwendet werden.

4. Verfahren nach Anspruch 1, dadurch gekennzeichnet, daß die netz-und sternpunktseitig erfaßten modulierten Erdschlußströme miteinander multipliziert werden, und daß aus dem Vorzeichen des Produktes ein Generator (2) erdschlußbehaftet erkannt wird.

5. Verfahren nach Anspruch 1, 3 oder 4, dadurch gekennzeichnet, daß den erfaßten modulierten Erdschlußströmen proportionale Signale zur Auswertung herangezogen werden.

6. Verfahren nach Anspruch 1, 2, 3, 4 oder 5, dadurch gekennzeichnet, daß die nach einem Vergleich erhaltenen Erdschlußströme bzw. proportionalen Signale mit einer auf die Taktfrequenz abgestimmten Frequenz gefiltert werden.

7. Verfahren nach einem der Ansprüche 1 bis 6, wobei netzseitig Strom und Spannungswandler (3) vorhanden sind, dadurch gekennzeichnet, daß auch die Phasenspannung gefiltert wird, und daß aus dem Produkt aus getaktetem Erdschlußstrom und -spannung der erdschlußbehaftete Generator (2) erkannt wird.

8. Verfahren nach Anspruch 1, 2, 6 oder 7, dadurch gekennzeichnet, daß bei Sternpunkterdung der Generatoren (2) und Auslösung einer Generator- Erdschlußtaktung alle Halbleiterschalter (11) synchron getaktet werden.

9. Schaltungsanordnung zur Durchführung des Verfahrens nach einem der Ansprüche 1 bis 5, 7 oder 8, wobei jeder Generator (2) in seiner Sternpunktleitung einen einphasigen Transformator (7) mit geerdeter Primärwicklung und netz- und sternpunktseitig in jeder Phase einen Stromwandler (3) für den Differentialschutz aufweist, dadurch gekennzeichnet, daß der Sekundärkreis eines jeden Transformators (7) einen Gleichrichter (9), einen Widerstand (10), einen Halbleiterschalter (11) und eine Meßeinrichtung (12) zur Erfassung eine gleichgerichteten Erdschlußstromes aufweist, daß die Meßeinrichtung (12) zur Abgabe eines Meßsignales an einen Eingang einer Überwachungseinrichtung (6) angeschlossen ist, deren erster Ausgang mit dem Steuereingang des Halbleiterschalters (11) zwecks Abgabe eines Dauerzündsignales oder einer Taktimpulsfolge mit fester Frequenz bei Überschreitung eines vorgegebenen Stromgrenzwertes durch den erfaßten Erdschlußstrom und deren zweiter Ausgang zur Übertragung eines Schaltsignales mit dem Steuereingang des zugehörenden Generatorschutzschalters (1) elektrisch leitend verbunden sind, und daß die Ausgänge der Stromwandler (3) jeder Phase jeweils an eine Auswerteeinrichtung (4) angeschlossen sind, deren Ausgangssignale an den Eingängen der Überwachungseinrichtungen (6) anstehen.

10. Schaltungsanordnung nach Anspruch 9, dadurch gekennzeichnet, daß bei parallel betriebenen Generatoren (2) eine Synchronisation der zugeordneten Überwachungseinrichtung (6) über eine Synchronisationsleitung (13) erfolgt.

11. Schaltungsanordnung zur Durchführung des Verfahrens nach einem der Ansprüche 1 bis 5, 7 oder 8, wobei ein Drehstromtransformator (8) mit geerdetem Sternpunkt der Primärwicklungen und im Dreieck geschalteten Sekundärwicklungen an das Netz angeschlossen ist, und wobei jeder Generator (2) netz- und sternpunktseitig in jeder Phasen einen Stromwandler (3) für den Differentialschutz aufweist, dadurch gekennzeichnet, daß der Sekundärkreis des Drehstromtransformators (8) einen Gleichrichter (9), einen Widerstand (10), einen Halbleiterschalter (11) und eine Meßeinrichtung (12) zur Erfassung eines gleichgerichteten Erdschlußstromes aufweist, daß die Meßeinrichtung (12) zur Abgabe eines Meßsignals an jeweils einen Eingang von Überwachungseinrichtungen (6) angeschlossen ist, deren erste Ausgänge über einen Taktbaustein (14) mit dem Steuereingang des Halbleiterschalters (11) zwecks Abgabe eines Dauerzündsignals oder einer Taktimpulsfolge mit fester Frequenz bei Überschreiten eines vorgegebenen Stromgrenzwertes durch einen erfaßten Erdschlußstrom und deren zweite Ausgänge zur Übertragung von Schaltsignalen mit den Steuereingängen der zugehörenden Generatorschutzschalter (1) elektrisch leitend verbunden sind, und daß die Ausgänge der Stromwandler (3) jeder Phase jeweils an eine Auswerteeinrichtung (4) angeschlossen sind, deren Ausgangssignale an den Eingängen der zugeordneten Überwachungseinrichtung (6) anstehen.

12. Schaltungsanordnung nach Anspruch 11, dadurch gekennzeichnet, daß bei Parallelbetrieb mehrere Generatoren (2) eine Abgabe des dem Erdschlußstrom proportionalen Signals von der Meßeinrichtung (12) an alle Überwachungseinrichtungen (6) erfolgt.

13. Schaltungsanordnung nach Anspruch 11 oder 12, dadurch gekennzeichnet, daß alle Überwachungseinrichtungen (6) mittels Steuerleitungen (15) derart gesteuert werden, daß die Taktimpulsfolge für den Halbleiterschalter (11) nur von einer Überwachungseinrichtung (6) erzeugt wird.

14. Schaltungsanordnung nach Anspruch 9, 10, 11, 12 oder 13 zur Durchführung des Verfahrens nach Anspruch 6, dadurch gekennzeichnet, daß zwischen den Auswerteeinrichtungen (4) und den Überwachungseinrichtungen (6) Filter (5) angeordnet sind, die auf die Taktimpulsfolge mit fester im Netz als Oberwelle nicht auftretender Frequenz abgestimmt sind.

# FIG.1

EP 0 330 851 A2

FIG.2